# EUROPEAN PATENT APPLICATION

(11) **EP 0 999 139 A2**
(43) Date of publication of application: **10.05.2000**
(21) Application number: 99308751.9
(22) Date of filing: 03.11.1999
(51) Int. Cl.: B65B 51/26, B65B 9/08

(54) **Sealing apparatus for a packaging machine**

(30) Priority: 03.11.1998 US 185356
(71) Applicant: Klockner Bartelt, Inc., Sarasota, Florida 34243 (US)
(72) Inventor: Todd, James E., Sarasota, Florida 34234 (US); Brooker, Thomas E., Sarasota, Florida 34243 (US); Conn, Gregory A., Sarasota, Florida 34243 (US)
(74) Representative: Mackenzie, Andrew Bryan

(57) **Abstract**

A sealing mechanism for a form, fill and seal packing machine having box motion sealers suitable for forming seals in both continuously and intermittently advancing webs. The sealers are disposed on opposite sides of the web and are operable to reciprocate into and out of engagement with the web. The sealers are further supported on carriages moveable longitudinally along the web path. As a result, the sealers may be operated in the box motion in which the sealers actuate into engagement with the web as the carriages move longitudinally downstream at the web speed. The sealers remain engaged with the web for a time sufficient to form a seal in the web before retracting out of engagement. The carriages then return longitudinally upstream to initial positions. The box motion may be repeated to form a series of seals in the web.

## Description

### Field Of The Invention

The present invention relates to packaging machines, and more particularly relates to sealers used in horizontal form, fill, and seal packaging machines.

### Background Of The Invention

Packaging machines are generally known in which a continuous web of material is converted into a plurality of individual pouches. The continuous web of material is folded in half over a plow to form two continuous side panels joined by a bottom fold. The folded web is passed through a series of seal bars which form transverse seals between the side panels, thereby forming a strip of pouches interconnected by transverse seals. A cutter cuts through each transverse seal to form individual pouches with unsealed top edges. The individual pouches are transferred to a pouch filler, filled with product, and sealed. The sealed pouches are then collected for transport. Machines of this type may be categorized as either horizontal or vertical machines, depending on the general direction of web travel. The present invention relates to horizontal packaging machines in which the web travels horizontally.

The type and volume of product being packaged often determines whether the packaging process should use a continuously or intermittently advancing web. Certain products, such as hard candy, require a fill based on weight instead of volume. Scale fillers require relatively long periods to fill a pouch. As a result, slower cycle continuous motion or intermittent motion is required to provide additional fill time. In addition, larger volume fills require more time, and therefore intermittent motion through the filler may be necessary. More free flowing products, such as sugar, may be dispensed using a diving funnel suitable for filling continuously advancing pouches.

In light of the above, packaging machines have been developed which specifically run either intermittent or continuous webs. In intermittent motion machines, the web and formed pouches are intermittently advanced between dwell periods, and packaging operations are performed during the dwells. In a continuous motion machine, on the other hand, the web and formed pouches continually advance at a set rate, and each station for performing operations is phased with the web to perform the operation as the web passes through the station.

The sealers used in most conventional intermittent motion machines typically comprise reciprocating seal bars which are fixed at a position along the web path. Such machines usually have an in-line configuration in which the web is advanced longitudinally along a straight web path. The pouch processing components, such as the sealers, are positioned along the web path to operate on the web during pauses in web advancement. As a result, the sealers in such machines are positioned at fixed locations and operated to reciprocate into and out of contact with the web during each pause. While such sealers may be adjusted for different pouch widths by repositioning the sealers or adjusting the timing of the reciprocating action, these conventional sealers are not suitable for use with a continuously advancing web, since the longitudinally static sealers would tear or stretch the web upon contact.

Most continuous motion machines use a somewhat more complex web path in which the web is entrained around various pouch forming stations in the form of rotating drums. U.S. Patent No. 5,722,217 to Cloud, for example, describes a packaging machine having a rotating seal drum. Sealing wires are circumferentially spaced about the sealing drum to provide sealing points. The web is entrained around the periphery of the seal drum and the seal drum is rotated to continually advance the web. While the web is in contact with the seal drum, vertical seals are formed in the web corresponding to the sealing points on the drum. The wiring configuration of the sealing wires must be changed to adjust for different pouch widths. Even then, only a limited number of pouch widths are provided for with a single drum and therefore certain pouch widths may require a specific drum. While this apparatus is suitable for forming seals in a continuously advancing web, it is difficult to adjust for different pouch widths. Furthermore, the complex web path often requires a greater amount of floor space.

A packaging machine having an in-line web configuration yet suitable for continuous web motion is described in U.S. Patent No. 3,230,687 to Nutting et al. In the '687 machine, a plurality of sealing bar pairs are mounted on separate endless tracks disposed on opposite sides of the web pass. Each track travels around a pair of spindles which form an oval track pass. When the tracks are rotated, the attached seal bars orbit about the tracks in the oval pattern so that the seal bars engage the web for a distance between the spindles before rotating away from the web. The tracks are operated so that a speed of the seal bars matches that of the web to thereby form seals in the web. As a result, the '687 machine provides an in-line setup adapted for continuous motion in which the seal bars are operated in an orbital pattern. The machine is, however, difficult to adjust for different pouch widths since the spacing of the seal bars on the tracks must be adjusted for such new widths.

### Summary Of The Invention

A general aim of the present invention is to provide a sealing apparatus having an improved seal bar motion.

In that regard, it is an object of the present invention to provide a sealing apparatus suitable for both continuously and intermittently advancing webs.

A more detailed object of the present invention is to provide a sealing apparatus which automatically registers with a web having registration marks.

In light of the above, the present invention provides a sealing apparatus having seal bars which are operated in a box motion. The seal bars are supported for longitudinal movement along the web path and simultaneous lateral movement into and out of engagement with the web path. In the preferred embodiment, each seal bar is attached to a carriage slideably mounted on a separate track. The carriages are moveable in the longitudinal direction while the tracks are operable in the lateral direction. In operation, the carriages move longitudinally downstream at a speed which matches that of the web. As the carriages move downstream, the tracks are actuated toward the web path so that the seal bars engage the web for a time sufficient to form a seal in the web. The seal bars then retract and the carriages move longitudinally upstream to prepare to form the next seal.

This sealing apparatus preferably incorporates variable speed motors connected to the carriages to drive the carriages longitudinally. A separate variable speed motor reciprocates the tracks. In the most preferred embodiment, the web has pre-printed registration marks and each carriage further carries a sensor for sensing the registration marks. The carriage motors are responsive to location signals generated by the sensors to thereby register the seal bars with the web.

These and other aims, objectives, and features of the invention will become more apparent from the following detailed description when taken in conjunction with the accompanying drawings.

### Brief Description Of The Drawings

FIG. 1 is a schematic view in perspective of a packaging machine in accordance with the present invention.

FIG. 2A-C are enlarged top, side, and end views of the currently preferred sealing mechanism in accordance with the present invention.

FIG. 3A-F are schematic top views of a seal station performing a box motion.

FIG. 4 is a block diagram showing controls for the sealing mechanism of FIG. 1

While the invention is susceptible of various modifications and alternative constructions, certain illustrative embodiments thereof have been shown in the drawings and will be described below in detail. It should be understood, however, that there is no intention to limit the invention to the specific forms disclosed, but on the contrary, the intention is to cover all modifications, alternative constructions and equivalents falling within the spirit and scope of the invention as defined by the appended claims.

### Detailed Description Of The Preferred Embodiment

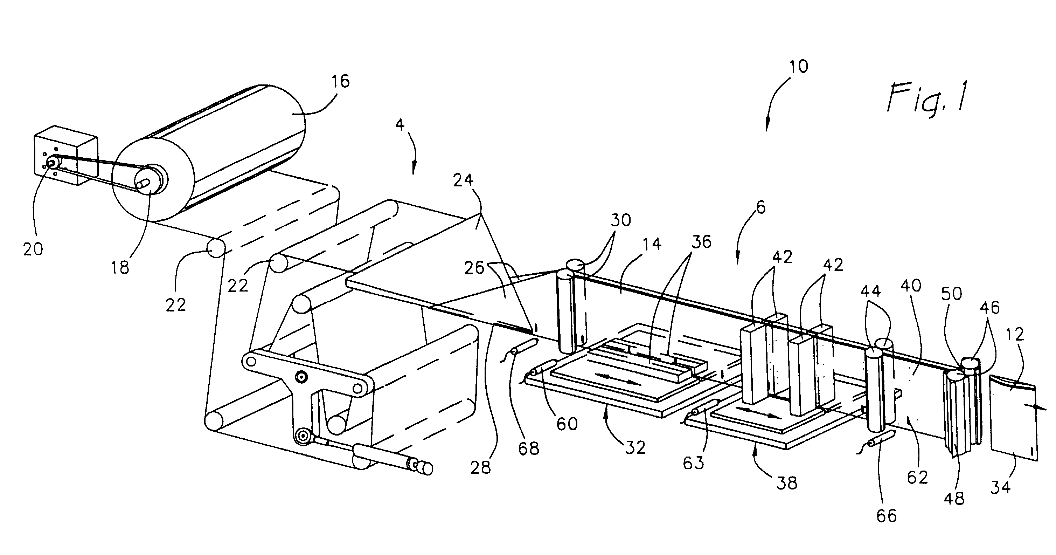

Referring now to the drawings, a packaging machine 10 is illustrated in FIG. 1. The packaging machine 10 produces pouches 12 from a continuous web 14 of material. The web 14 has pre-printed registration marks 62 at spaced intervals corresponding to the desired pouch width. The position of the registration marks is known with respect to the printed artwork on the web. The web is made of sealable material, which includes heat-sealable material (such as polyethylene or polypropylene) and pressure-sensitive cold seal film. The embodiments described below are directed mainly to a machine 10 running heat-sealable web material.

According to the illustrated embodiment, the packaging machine has an infeed section 4 which supplies the folded web 14 to a sealing section 6. The planar web material is typically supplied as a wound roll 16. The infeed section 4 has a reel 18 for supporting the roll 16. The reel 18 rotates to unwind the roll 16, thereby dispensing the material as the web 14. The reel 18 may be conventionally controlled or may have a dedicated unwind servomotor 20 for varying an unwind speed. The web 14 is threaded over tension rollers 22 and a plow assembly 24 for folding the web to form mating side panels 26 joined at a common bottom edge 28. As illustrated in FIG. 1, the bottom edge 28 is formed with a V-shape. The plow assembly 24 may also include a gusset blade (not shown) for forming a W-shaped bottom edge. The folded web 10 is passed through a pair of infeed rolls 30 to cleanly define the fold lines in the web.

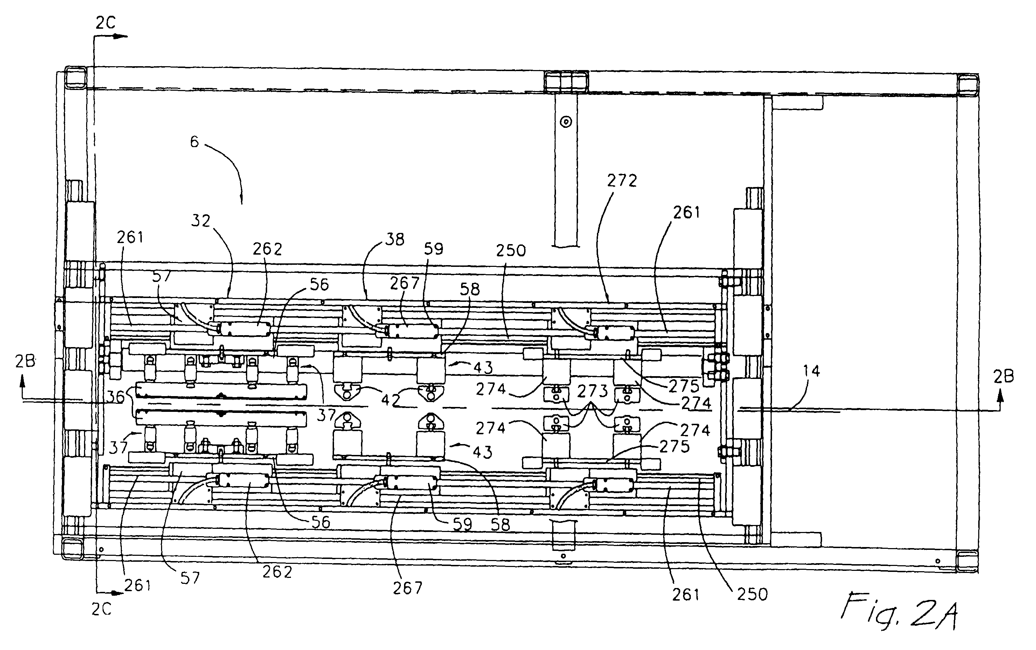

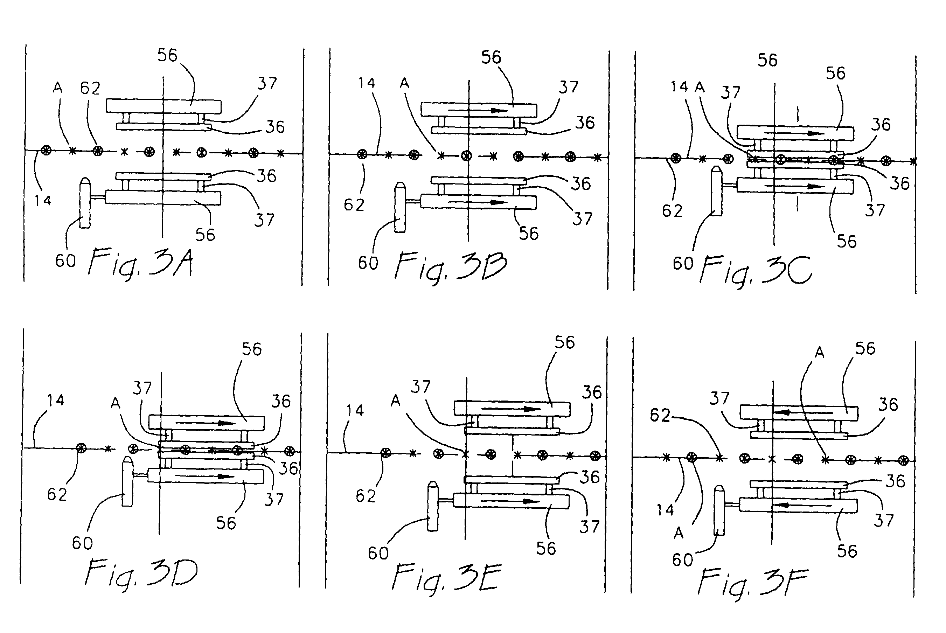

The web 14 next travels through the sealing portion 6 of the machine 10 in which any of a number of pouch forming operations take place. In accordance with the embodiment illustrated in FIG. 1, the web 14 first passes through a bottom or first seal station 32 for forming a bottom seal 34 (such as a delta seal) in the web 14. The web 14 next passes through a side seal station 38 which forms side seals 40 in the web. Upon leaving the side seal station 38, the web 14 is formed as a strip of pouches interconnected at the side seals 40. The seal stations 32, 38 may use heated seal bars to form seals in heat-sealable web material, or may use unheated seal bars when the web material is a cold seal film. When heated, the seal bars have a heating element such as heat tube 276 extending therethrough (FIG. 2A). The heat tube is electrically operated and controlled to provide a desired sealing temperature.

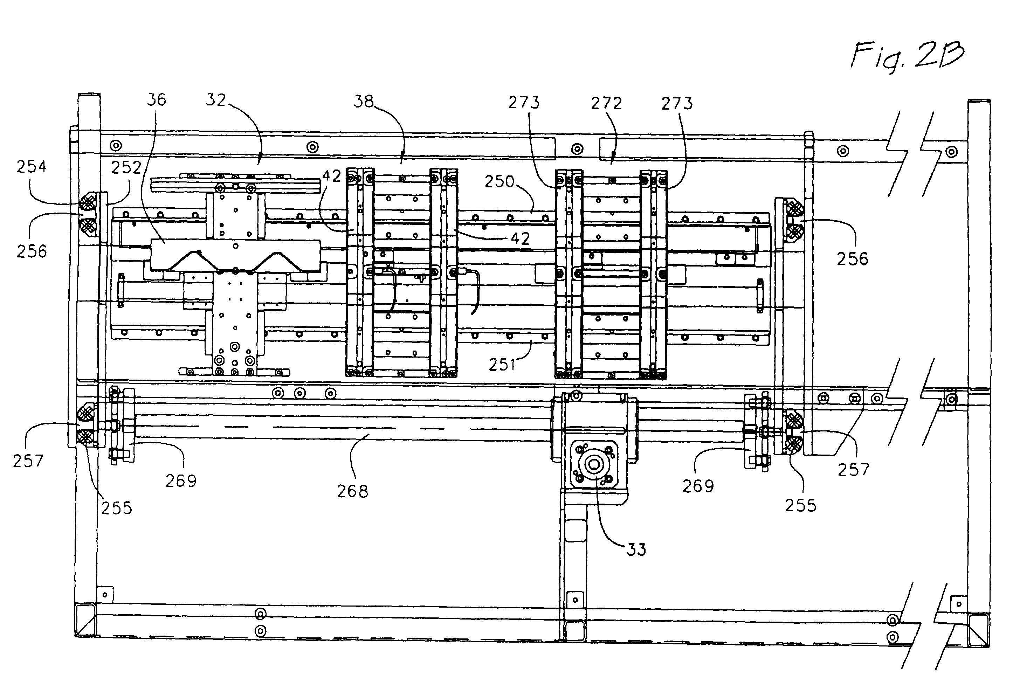

The currently preferred embodiments of the bottom and side seal stations 32, 38 are illustrated in FIGS. 2A-C. As best shown in FIG. 2A, the bottom seal station 32 comprises a pair of opposing bottom seal bars 36. A sub-support 37 is attached to the rear of each bottom seal bar 36, and each sub-support 37 is, in turn, attached to a carriage 56. Each carriage 56 is adapted, such as by attached bearing sets, to slide along upper and lower tracks 250, 251 which extend along the length of the sealing section, as best shown in FIG. 2B. The sliding carriages 56 allow the bottom seal bars 36 to translate back and forth parallel to the web path, defined herein as longitudinal motion.

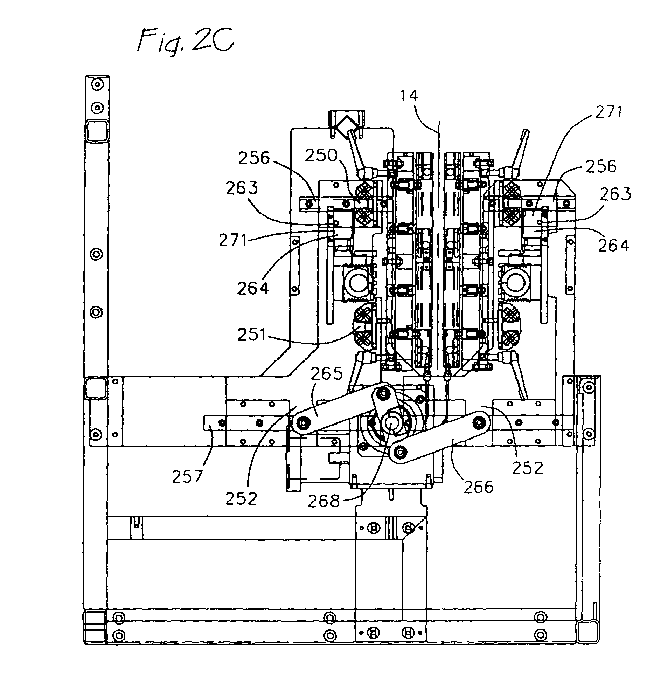

The bottom seal bars 36 are further operable in a direction perpendicular to the web path, defined herein as lateral motion. The ends of the upper and lower tracks 250, 251 are affixed to end supports 252, 253 (FIG. 2B). The end supports 252, 253 have upper and lower bearing sets 254, 255 which run along upper and lower rails 256, 257. The upper and lower rails 256, 257 are disposed perpendicular to the web path and are supported by a frame structure of the sealing section. As best shown in FIG. 2B, a shaft 268 extends along the length of the seal section. A crank 269 is attached to each end of the shaft 268. As best shown in FIG. 2C, each crank 269 is pivotally attached to a pair of links 265, 266. The links 265, 266 are, in turn, pivotally attached to the end supports 252, 253. Accordingly, it will be appreciated that when the shaft 268 rotates clockwise as illustrated in FIG. 2C, the end supports 252, 253 are translated laterally inwardly, Conversely, counterclockwise shaft rotation transports the end supports laterally outwardly. As a result, the upper and lower tracks 250, 251 are supported for lateral movement toward and away from the web path, thereby reciprocating the bottom seal bars 36 into and out of engagement with the web path.

In the preferred embodiment, the sub-supports 37 take the form of a plurality of spring packs 258. Each spring pack 258 has a spring-loaded post 259. Some of the spring packs 258 are attached to the bottom seal bar 36 with a T-connection 260. The T-connection 260 engages the spring-loaded post 259 to thereby allow the bottom seal bars 36 to yield under certain surface pressures acting on the seal bars. The remaining spring packs 258 provide additional spring force against the seal bar 36, but are not used to mount the seal bar and therefore do not have the T-connections 260. As a result, it will be appreciated that when the opposing bottom seal bars 36 engage, the spring posts create a variable pressure level between the seal bars which increases as the spring packs compress. The lateral stroke distance of the seal bars is then adjusted to obtain the desired pressure force. The desired pressure force varies according to the application, but in most pouch making operations typically does not exceed 40 psi.

The side seal station 38 has a structure similar to that of the bottom seal station 32. As best shown in FIGS. 2A-C, the side seal station comprises two pairs of opposing side seal bars 42. Sub-supports 43, preferably comprising a plurality of spring packs 258, are attached to the side seal bars 42. The sub-supports 43, in turn, are attached to carriages 58 mounted for translation along the upper and lower tracks 250, 251. As a result, rotation of shaft 268 also moves the side seal bars 42 in the lateral direction.

From the above, it will be appreciated that seal bar changeovers are quickly and easily performed. To reconfigure the seal bars of a particular carriage, the old seal bars, with attached spring packs, are removed and the new seal bars (also having attached spring packs) are attached to the carriage. If the new seal bars have been previously installed on the carriage, they should be automatically aligned with the web path upon installation. If fine-tuning is required, the spring-loaded posts may be adjusted to properly align the seal bars. If the bottom seal station also has a zipper seal, the zipper and bottom seal bars are mounted on a common mounting plate which is simply attached to the carriage. The mounting plate maintains the proper spacing between the zipper and seal bars.

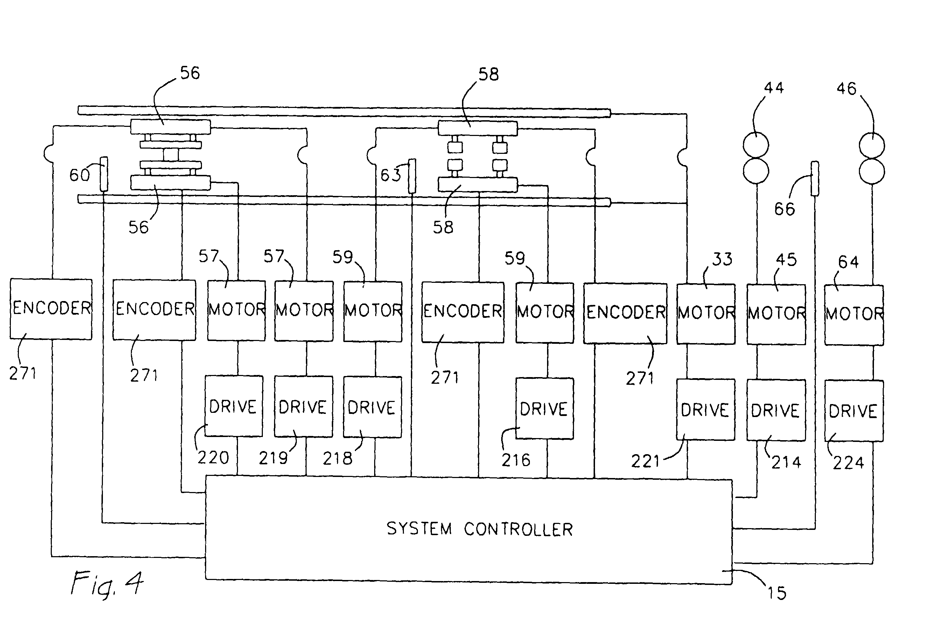

The combination of laterally moving tracks 250, 251 and longitudinally translating carriages allows the seal bars to be driven in a box motion. As best shown in FIG. 3A, the bottom seal bars 36, for example, begin in an initial position, in which the bars are retracted from the web and the carriages 56 are at an upstream position. From the initial position, the carriages 56 are driven downstream at a same speed as the web, as shown in FIG. 3B. With the carriages 56 still moving downstream, the tracks 250, 251 are driven laterally inwardly so that the tracks 250, 251 engage the web 14 (FIG. 3C). The bottom seal bars 36 are held in the inward position for a period of time sufficient to form a bottom seal as carriage 56 continues to advance with the web 14 (FIG. 3D). After the bottom seal 34 is formed, the tracks 250, 251 are retracted and the carriages 56 reverse direction so that the web 14 advances downstream relative to the seal bars 36 (FIG. 3E). With the bottom seal bars 36 retracted, the carriages 56 move longitudinally upstream toward the initial position (FIG. 3F). The bottom seal station 32 then repeats the above-described box motion to form subsequent bottom seals 34. The side seal station 38 is operated in a similar fashion.

In the above embodiment, the sealing stations 32, 38 operate in a duplex mode, in which the web 14 advances two pouch widths between each actuation of the seal bars. Accordingly, the bottom seal bars 36 are two pouch widths wide to simultaneously form two bottom seals 34. Similarly, the side seal station 38 carries two pairs of side seal bars 42. The machine 10 may also be operated in a simplex mode, whereby the web 14 is advanced a single pouch width between each actuation. In simplex mode, the bottom seal bars 36 are only one pouch width wide, and the side seal station 38 has a single pair of side seal bars 42.

In the preferred embodiment, variable speed motors operate the bottom and side seal stations 32, 38 in the box motion. With respect to the bottom seal station 32, a carriage servomotor 57 is attached to each carriage 56 for driving the carriage longitudinally. As best shown in FIGS. 2A and 4, the carriage servomotor 57 is preferably a linear motor comprising a magnetic rod 261 extending along the length of the sealing station. A motor housing 262 has a wire coil through which current is pulsated, to thereby drive the housing back and forth along the magnetic rod. The housing 262 is attached to a rear face of the carriage 56. As a result, movement of the housing 262 along the rod 261 directly drives the carriage 56 longitudinally along the upper and lower tracks 250, 251. As best shown in FIG. 2C, each carriage 56 has an associated housing 262 and rod 261. In the preferred embodiment, each linear motor further comprises an encoder 271 for providing feedback regarding position of the carriage. The encoder has an encoder rod 263 extending along the length of the seal section. An encoder head 264 has an aperture for receiving the encoder rod 263 and indicating the position of the head along the rod. The head 264 is also mounted to the back face of the carriage 57 and therefore the position of the head also indicates the position of the bottom seal bars 36. Servomotors 59 also drive the side seal carriages 58. The side seal servomotors 59 are also preferably linear motors having housings 267 mounted on the same magnetic rods 261. Additional encoder heads 264 are attached to the carriages 58 to slide along the encoder rods 263.

The lateral motion of the bottom and side seal bars 36, 42 is also preferably motor-driven. The shaft 268 extends through a gearbox 270 which is coupled to a servomotor 33. The motor 33 is operable to rotate in either direction, which operates the linkage connected to the end plates to thereby drive the lateral motion of the tracks 250, 251.

While the embodiment illustrated in FIGS. 2A-C is currently preferred, it will be appreciated that other arrangements may be used in accordance with the present invention, as long as the seal bars 36 are operable to translate in the longitudinal and lateral directions. For example, as schematically illustrated in FIG. 1, a single carriage mounted under the web may support the seal bars on both sides of the web. Such an embodiment, however, would require a second motor mounted on each carriage for driving the lateral motion of the seal bars.

The seal bars are operated to engage the web as the web advances for both continuous and intermittent web motion. It will be appreciated that for intermittent web motion, the machine 10 of the present invention could be operated so that the seal bars engage the web during web dwells, as is conventional. In the currently preferred embodiment, however, the seal bars always contact the web as the web advances, whether in continuous or intermittent mode. By operating the seal stations in this manner, the seal bars will always be in contact with the web for a sufficient period of time to form the seals regardless of the dwell time between each intermittent advance of the web. Furthermore, the machine operates in a similar fashion for both continuous and intermittent web motions, thereby simplifying the controls and providing a machine which operates in a consistent manner, regardless of the type of web motion.

According to the embodiment illustrated in FIGS. 2A-C, the sealing section further comprises a cooling station 272. The cooling station 272 has cooling bars 273 carried by sub-supports 274. Carriages 275 carry the sub-supports 274 and are mounted on the upper and lower tracks 250, 251. Accordingly, the cooling station 272 is operated in the box motion similar to the bottom and side seal bars 36, 42. The cooling bars, however, are kept at a cool temperature in contrast to the heated seal bars. The cooling bars 273 set the side seals in the web so that the side seals 40 are stronger and do not stretch as the web 14 is pulled through the machine 10. The sealing section may also have mechanisms for notching, punching, and emboss coding the web. These additional components are located downstream of the cooling station.

A pair of drive rolls 44 are located downstream of the seal stations to pull the web through the sealing section of the machine 10 (FIG. 1). The drive rolls 44 are positioned to pinch the web 14, thereby frictionally advancing the web. In the preferred embodiment, the drive rolls are operable both continuously and intermittently. In the most preferred embodiment, a variable speed motor, such as drive roll servomotor 45, is coupled to and operates the drive rolls (FIG. 4).

A cutter is positioned immediately downstream of the drive rolls 44 (FIG. 1). In the currently preferred embodiment, the cutter comprises a pair of cutter rolls 46, a first roll having a plurality of circumferentially spaced blades 48 and a second roll having a plurality of similarly spaced cutting surfaces 50. The cutter rolls 46 are mounted for rotation so that a blade 48 contacts the web 14 at the same time as an associated cutting surface 50 to thereby sever a leading pouch 52 from the web. While the cutter rolls are preferred, it will be appreciated that other cutting mechanisms, such as a reciprocating blade and anvil, may be used in accordance with the present invention. In the preferred embodiment, a variable speed motor 64 operates the cutter rolls 46 (FIG. 4). Each pouch severed by the cutter rolls 46 is then transferred to a pouch filling and sealing machine.

The above-described sealing and cutting components are operated with an adjustable dwell between operations so that pouch-forming operations are synchronized with web travel. A system controller 15 is programmed to adjust a component dwell period between operations to thereby adapt the machine 10 for different operating parameters. In the preferred embodiment, the machine 10 uses electronic line shafting to adjust the dwell and thereby synchronize the motor-driven components. An oscillator generates a pulse stream and is connected to a microprocessor in the system controller 15. The pulse stream corresponds to the web speed such that a given web speed has a corresponding pulse rate. The pulse rate is adjusted proportionally to web speed. As a result, the distance the web advances between pulses is always constant, and components may be placed at locations downstream of a fixed point on the machine which correspond to certain pulse counts. Web speed is defined herein as the instantaneous rate of travel of the web 14 as it advances. Under this definition, web dwell time during intermittent motion is not used to compute the instantaneous web speed.

According to the illustrated embodiment, the machine 10 has an infeed sensor 68 located at a registration point for sensing the registration marks 62 and generating a sync signal as each registration mark passes. The sync signals inform the system that the web is positioned in the machine 10 with a registration mark 62 at the registration point. With a defined registration point, therefore, components may be positioned at known distances downstream of that point and controlled to actuate a determined number of pulses after the registration signal. For example, the first seal station 32 may be positioned 2 feet downstream of the registration point, which may correspond to 1,000 pulses. The system controller 15 may then control the seal station to actuate after 1,000 pulses are counted from the sync signal. The pulse rate is generated such that, for this example, 1,000 pulses correspond to 2 feet of web travel for any web speed.

As noted above, a sync signal indicates that a registration mark is passing the sensor 68. The registration marks 62 are longitudinally spaced at pouch width intervals along the web so that consecutive sync signals indicate that the web 14 has advanced one pouch width, defined herein as a cycle. In the most preferred embodiment, the web-engaging components are positioned downstream of the infeed at pouch width intervals. As a result, the components are controlled to operate with reference to each sync signal.

The controller 15 allows the machine 10 to be quickly and easily adapted to form pouches of various sizes. As noted above, the components of the machine may be positioned at web width intervals. If the pouch width is changed, the position of the components must also be adjusted for the new width. Using the example presented above, the first seal station 32 may be repositioned 1 foot downstream of the registration point rather than 2 feet. The microprocessor of the system controller 15 may be programmed so that, for the new position, the first seal station 32 is actuated after 500 pulses are counted from the sync signal, thereby adjusting the dwell period of the first seal station. The servomotors 57, 59 of the carriages 56, 58 allow the first and second seal stations 32, 38 to be quickly and easily repositioned for the new pouch width. Furthermore, the system controls are programmed to modify the dwell periods between component operations. Accordingly, the pouch making machine 10 of the present invention is quickly and easily adapted for various pouch sizes.

The above-described box motion of the seal stations 32, 38 is also preferably timed using the pulse stream. Accordingly, the carriages 56 of the bottom seal station 32 are controllably positioned a known distance downstream of the infeed sensor 68. As illustrated in FIG. 4, the system controller signals drives 219, 220 to generate a drive signal to the carriage servomotors 57 to move the carriages 56 downstream at a speed equal to the web speed at a predetermined pulse count after each sync signal. As the carriages 56 move, the system controller 15 signals the reciprocating motor 33 through drive 221 to actuate the bottom seal bars 36 laterally inward after a predetermined number of pulses have elapsed after each sync signal. The motor 33 holds the bottom seal bars 36 in the inward position for another predetermined number of pulses corresponding to a sufficient period of time to form a seal in the web. Once the seal is formed, the bottom seal bars are retracted and the carriages 56 are driven upstream to the initial position. The same procedure is followed after each sync signal. The side seal station is operated in the same fashion. While the use of a pulse stream is preferred, it will be appreciated that other types of controls may be used to actuate the seal stations, such as the use of optical sensors which provide a feedback signal to initiate actuation of the components.

In the preferred embodiment, the seal stations 32, 38 are provided with automatic registration to the web 14, To accomplish registration, the carriages 56, 58 of each seal station 32, 38 further carry a sensor for sensing the registration marks 62 and delivering a seal registration signal. The bottom seal station 32, for example, carries a bottom seal sensor 60, as shown in FIGS. 1 and 4. The system controller 15 receives the signal and drives the carriage motors 57 to position the carriages 56 relative to the registration mark 62 so that the bottom seal bars 36 are positioned over appropriate seal points on the web. As a result, the bottom seal station 32 is continually and automatically registered with the web 14. Any carriage position adjustments required for registration are compensated for by the microprocessor in the system controller 15, so that the box motion is executed in registration with the web 14. The side seal station 38 has a side seal sensor 63 for effecting similar registration. As shown in FIG. 4, the carriage motors 59 have drives 216, 218 coupled to the system controller 15. The sensor 63 delivers a location signal to the controller 15 which, in turn, adjusts the drive signals sent to the motors 59.

Pouches separated from the web by the cutter are transferred to a pouch filling apparatus. The pouch filling apparatus opens each individual pouch, fills the pouch with product, closes the filled pouch, and seals the top edge. The filled and sealed pouches are then collected for transport. The filling apparatus may be conventional, but is preferably operable to receive and advance individual pouches both continuously and intermittently, according to the web motion through the sealing mechanism.

From the above, it will be appreciated that the present invention provides a sealing mechanism unlike the previously known sealers for continuously or intermittently advancing webs. The present sealer engages an advancing web, unlike previous intermittent sealers which engage the web during pauses. Furthermore, the sealer is triggerable unlike previous continuous web machines which require the sealer to be phased with the web.

It will further be appreciated that the present invention provides a new and improved mechanism for forming seals in a web of material. The sealing mechanism has sealing surfaces which are operated in a box motion suitable for both continuously and intermittently advancing webs. A pair of sealers are positioned on opposite sides of the web path. The sealers are operable to reciprocate into and out of engagement with the web path. The sealers are further supported on a carriage moveable in a longitudinal direction along the web path. Accordingly, the sealers may be operated in a box motion in which the sealers are reciprocated into engagement with the web path as the carriage moves longitudinally downstream at the web speed. The sealers remain in the engaged position for a time sufficient to form a seal in the web. The sealers are then retracted out of engagement with the web path and the carriage returns longitudinally upstream to the initial position. The above-described box motion may then be repeated to form subsequent seals. The box motion may be used for both continuously and intermittently advancing webs, thereby providing a versatile sealing mechanism.

## Claims

1. Apparatus for forming seals in a web of sealable material folded to have mating first and second sides, the web advancing along a web path, the apparatus comprising:
at least one set of opposed first and second seal bars positioned on opposite sides of the web path;
a power-driven mechanism for longitudinally sliding the first and second seal bars along the web path; and
a power-driven mechanism for actuating the seal bars perpendicular to the web path;
wherein the sliding and actuating mechanisms are adapted to operate each seal bar in a box motion whereby the seal bar engages the web path as the seal bar moves longitudinally downstream along the web path, retracts away from the web path, and moves longitudinally upstream along the web path back to a home position to define the box.

2. The sealing apparatus of claim 1 in which the web continuously advances at a web speed, and wherein the sliding mechanism moves the seal bars longitudinally downstream at a speed matching that of the web.

3. The sealing apparatus of claim 1 in which the web intermittently advances at an instantaneous web speed between dwells, and wherein the sliding mechanism moves the seal bars longitudinally downstream at a speed matching that of the web.

4. The sealing apparatus of any of claimsl-3 in which the sliding mechanism comprises first and second carriages slidably mounted on first and second tracks and attached to the first and second seal bars, respectively.

5. The sealing apparatus of any of claim 1-4 including a plurality of sets of seal bars arranged to form respective bottom and side reels in the cycle.

6. The sealing apparatus of any of claims 1-6 in which the web has registration marks printed thereon, the sealing apparatus further comprising a sensor for sensing the registration marks and delivering a location signal to the controller, the controller adapted to adjust positions of the carriages based on the location signal.

7. The sealing apparatus of any of claims 1-6 further comprising first and second linear motors attached to first and second carriages, respectively, the first and second linear motors slidably mounted on first and second magnetic rods disposed parallel to the tracks, the controller controlling position and speed of each linear motor along the magnetic rods, and the sealing apparatus of claim 7 in which the first and second linear motors further comprise first and second encoders attached to the first and second carriages and slidably mounted along first and second encoder rods, respectively, the encoder rods disposed parallel to the tracks.

8. The sealing apparatus of any of claims 1-7 in which the actuating mechanism comprises mechanical linkage attached to the first and second tracks, and a variable speed motor drivingly connected to the mechanical linkage.

9. A method of forming seals between first and second sides of a folded web of sealable material, the web advancing at a web speed along a web path, at least one pair of seal bar forming a set and disposed on opposite sides of the web path, each seal bar set slidably mounted to follow a path running parallel to the web path, the method comprising the steps of:
longitudinally translating the seal bar set downstream at a speed matching that of the web;
laterally actuating the seal bar set toward the web path so that the seal bar sets engages the web for a seal period;
laterally retracting the seal bar set so that the seal bar set disengages the web; and
longitudinally translating the seal bar set upstream along the tracks.

10. The method of claim 9 wherein there are provided a plurality of seal bar sets, each set comprising a pair disposed on opposite sides of the web path, and the steps of translating, actuating, retracting and translating are applied to all sets, the sets being oriented to form both bottom and side seals in the web.
